# EUROPÄISCHE PATENTANMELDUNG

(11) **EP 3 401 080 A1**
(43) Veröffentlichungstag der Anmeldung: **14.11.2018**
(21) Anmeldenummer: 18000442.6
(22) Anmeldetag: 09.05.2018
(51) Int. Cl.: B29C 64/10, A44C 27/00, B29K 505/00, B33Y 70/00, B33Y 80/00, B29K 509/02

(54) **VERFAHREN ZUR ADDITIVEN HERSTELLUNG VON DEKORATIVEN UND/ODER FUNKTIONALEN KETTEN**

(30) Priorität: 10.05.2017 DE 102017004461
(71) Anmelder: VOJD GmbH, 12047 Berlin (DE)
(72) Erfinder: Die Erfindernennung liegt noch nicht vor
(74) Vertreter: Jungblut & Seuss

(57) **Zusammenfassung**

Die Offenbarung betrifft ein Verfahren zur produktionstechnischen additiven Herstellung von Ketten auf Basis eines organischen Polymerwerkstoffes. Sie ist dadurch gekennzeichnet, dass dem Polymerwerkstoff ein Zuschlagsstoff beigemischt ist, welcher die Dichte des Polymerwerkstoffes mit dem Zuschlagsstoff gegenüber dem Polymerwerkstoff ohne den Zuschlagsstoff um zumindest 20% erhöht. Die Erfindung betrifft des Weiteren so oder mit anderen Verfahren hergestellte Ketten, die aus aneinandergereihten und miteinander verknüpften Zeichen bestehen.

## Beschreibung

### Gebiet der Erfindung.

Die Erfindung betrifft ein Verfahren zur additiven Herstellung von Ketten auf Basis eines organischen Polymerwerkstoffes, sowie eine mittels eines solchen Verfahrens herstellbare Kette. Die Erfindung betrifft des Weiteren, auch unabhängig von dem Einsatz eines organischen Polymerwerkstoffes, eine Kette enthaltend oder bestehend aus Gliedern, welche aus Zeichen gebildet sind.

### Stand der Technik und Hintergrund der Erfindung.

Grundsätzlich sind Verfahren zur Herstellung von Gegenständen mittels additiver Verfahren, beispielsweise 3D Druck, aus der Praxis bekannt. Hierbei werden üblicherweise verschiedene meist thermoplastische organische Polymerwerkstoffe eingesetzt.

Würden solche Verfahren zur produktionstechnischen additiven Herstellung von funktionalen oder dekorativen Ketten, beispielsweise Ketten für Handtaschen und sonstige modische Gegenstände des Alltages, oder Hals-, Arm- oder Fußketten, eingesetzt, so würde der verwendete Polymerwerkstoff aufgrund der vergleichsweise niedrigen Dichte (im Bereich um 1 g/cm³) zu einem niedrigen Gewicht der Kette führen, was bei dem Endverbraucher zu einer reduzierten Qualitätsanmutung führen würde, welche stört.

Aus der Praxis ist auch bekannt, Ketten gliedweise herzustellen, beispielsweise im Spritzgussverfahren oder anderen nichtadditiven Verfahren herzustellen. Nachteilig ist dabei, dass zur Verknüpfung der Glieder miteinander typischerweise Klebeprozesse an den Glieder, oder andere stoffschlüssige Verbindungsverfahren zusätzlich und nach dem Verknüpfen durchzuführen sind. Dies gilt insbesondere dann, wenn die Glieder aus einem organischen Polymerwerkstoff gebildet sind. Diese Notwendigkeit ergibt sich insbesondere in dem Falle von Ketten, welche funktional sind und daher insgesamt eine gewisse Zugkraft zu halten in der Lage sein müssen.

Weiterhin aus der Praxis bekannt sind Ketten, deren Glieder aus Zeichen gebildet sind. Hierbei erfolgt die Verknüpfung der Glieder maschinell. Eine effiziente maschinelle Verknüpfung erfordert jedoch eine wiederholbare maschinelle Bewegung. Im Falle von Ketten aus Zeichen, insbesondere wenn die Zeichenreihenfolge beliebig variierbar sein soll und die Zeichen unmittelbar miteinander verknüpft sein sollen (also ohne Zwischenglieder oder Ösen), wäre eine solche konventionelle maschinelle Fertigung aufgrund der Permutationen der Gliederfolgen (beispielsweise bei frei wählbaren Namensketten) extrem aufwändig. Eine alternative händische Verknüpfung der Glieder wiederum wäre sehr kostenintensiv.

### Technisches Problem der Erfindung.

Der Erfindung liegt daher das technische Problem zu Grunde, ein produktionstechnisches Verfahren zur Herstellung von Ketten anzugeben, welches einerseits alle Vorteile additiver Herstellungsverfahren aufweist, andererseits aber Ketten mit hoher Qualitätsanmutung zur Verfügung stellt. Der Erfindung liegt das weitere Problem zu Grunde, eine Kette anzugeben, welche eine Vorrichtung zum Pelletieren einer pastösen Masse, wobei die mit der Vorrichtung herstellbaren Pellets eine längliche Form aufweisen, anzugeben, welche einerseits insbesondere längliche Samen des Saatgutes schonend in die Matrix einbettet, andererseits aber einfacher baut und im Produktionsmaßstab eingesetzt werden kann.

Grundzüge der Erfindung und bevorzugte Ausführungsbeispiele.

Zur Lösung dieses technischen Problems lehrt die Erfindung ein Verfahren zur produktionstechnischen additiven Herstellung von Ketten auf Basis ' eines organischen Polymerwerkstoffes, wobei dem Polymerwerkstoff ein Zuschlagsstoff beigemischt ist, welcher die Dichte des Polymerwerkstoffes mit dem Zuschlagsstoff gegenüber dem Polymerwerkstoff ohne den Zuschlagsstoff um zumindest 20% erhöht.

Der Begriff "produktionstechnisch" unterscheidet sich vom klassischen Prototyping mittels additiver Verfahren dadurch, dass eine Serienfertigung stattfindet, typischerweise von zumindest 10, 100, 1000, oder mehr Einzelstücken, welche miteinander identisch sein können, aber auch voneinander abweichen, wenn beispielsweise Namensketten mit individualisierten Zeichenfolgen hergestellt werden. Die insofern stattfindende Individualisierung ist dabei vom Prototyping zu unterscheiden, da nach wie vor hohe Stückzahlen an Ketten, wie oben angegeben, produziert werden, diese jedoch lediglich in der hergestellten Zeichenfolge variant sind.

Additive Verfahren sind beispielsweise Stereolithographie, Photopolymer Jetting, Binder Jetting, Laser Melting, Electron Beam Melting, Fused Deposition Modelling, Laser Sintering und Material Jetting. Additive Verfahren unterscheiden sich von anderen Herstellungsverfahren, wie abtragende Fertigungsmethoden oder Formgussverfahren, dadurch, dass der herzustellende Gegenstand aus nacheinander stoffschlüssig aneinander gefügten Schichten aus dem gewünschten Werkstoff gebildet wird.

Bei dem eingesetzten Polymerwerkstoff kann es sich um ein einziges Polymer handeln, es können aber auch Mischungen aus unterschiedlichen Polymeren, beispielsweise Blends, eingesetzt werden. Im Falle von Blends gelten die eingangs genannten Probleme ganz entsprechend, weil verschiedene Polymerwerkstoffe nur eher geringe Unterschiede in der Dichte aufweisen. Die Bezugsgröße der Dichte des Polymerwerkstoffes bezieht sich dann auf einen solchen Blend.

Mit der Erfindung wird erreicht, dass Ketten in Serienfertigung hergestellt werden können, welche den Anforderungen hoher Qualitätsanmutung genügen, insbesondere schwer wirken, spürbar schwerer, als Ketten aus dem Polymerwerkstoff an sich.

Bevorzugt ist es, wenn die Dichte des Polymerwerkstoffes mit dem Zuschlagsstoff gegenüber dem Polymerwerkstoff ohne Zuschlagsstoff um zumindest 25%, vorzugsweise zumindest 30%, aber auch zumindest 40% erhöht ist.

Der eingesetzte Polymerwerkstoff ist grundsätzlich beliebig und es eignet sich jeder Polymerwerkstoff, welcher mittel additiver Fertigungsverfahren verarbeitbar ist. Vorzugsweise ist der Polymerwerkstoff ausgewählt aus der Gruppe bestehend aus Polyamid, insbesondere PA12, thermoplastisches Polyurethan, Silikongummi, ABS, Polylactid, Polypropylen, Polystyrol, Polyvinylalkohol, Polyethylenterephtalat, Nylon, Biopolymere, und WPC (Wood Polymer Composites).

Als Zuschlagsstoff kann grundsätzlich jeder Stoff ausgewählt sein, dessen Dichte deutlich höher als die Dichte des Polymerwerkstoffes (ohne Zuschlagsstoff) ist. Typischerweise aber nicht notwendigerweise ist der Zuschlagsstoff ein Pulver. Er kann ausgewählt sein aus der Gruppe bestehend aus Keramik und Metall, wobei der Zuschlagsstoff vorzugsweise weiße oder farblose Keramik ist. Letzteres ist bevorzugt, weil damit der anderorts angesprochene Färbeprozeß leichter und zuverlässiger ausführbar ist. Der Zuschlagsstoff weist zweckmäßigerweise eine Dichte auf, welche zumindest das 2-fache, insbesondere zumindest das 3-fache, der Dichte des Polymerwerkstoffes beträgt. Der Polymerwerkstoff hat typischerweise eine Dichte im Bereich von 1,0 bis 1,6 g/cm³. Der Zuschlagsstoff ist vorteilhafterweise homogen in dem Polymerwerkstoff verteilt. Das Gewichtsmengenverhältnis des Polymerwerkstoffes (ohne Zuschlagsstoff) zu dem Zuschlagsstoff liegt typischerweise im Bereich von 1 : 0,1 bis 1 : 5, insbesondere von 1 : 0,2 bis 1 : 2, vorzugsweise 1 : 0,4 bis 1 : 1.

Die Erfindung betrifft auch eine Kette, hergestellt mittel eines erfindungsgemäßen Verfahrens. Hierbei spielt eine besondere Rolle, dass die Glieder der Kette aus einer Vielzahl von Schichten sukzessive aufgebaut worden sind (additive Fertigung). Dies lässt sich auch dadurch erkennen, dass einerseits die Oberfläche der Kettenglieder zumindest im mikroskopischen Bereich Stufen aufweist, welche aus dem schichtweisen Aufbau herrühren. Aber auch ein Schnitt durch ein Kettenglied, ggf. Anschliff, und mikroskopische Analyse der Schnittfläche wird in aller Regel den schichtweisen Aufbau erkennen lassen.

Erfindungsgemäße Ketten können rein dekorativ sein (beispielsweise Hals-, Arm-, oder Fußketten), oder auch funktional, beispielsweise als Tragekette für Taschen jeglicher Art, insbesondere Handtaschen, Sporttaschen, Einkaufstaschen, Reisetaschen etc.

Von unabhängiger Bedeutung ist eine erfindungsgemäße Kette, wobei die Kette aus einer Mehrzahl von Zeichen gebildet ist, wobei die Zeichen eine Aneinanderreihung von gegeneinander beweglichen und ineinandergefügten oder mit Gelenken verbundenen Gliedern bilden. Hierbei wird es sich typischerweise um eine dekorative Kette handeln, es kann aber auch zusätzlich eine Funktion der Kette, wie vorstehend beschrieben, vorliegen.

Dabei kann zur Herstellung das vorstehend genannte Verfahren eingesetzt werden, dies ist aber nicht zwingend erforderlich. Ebenso können in der Folge beschriebene Verfahren und Materialien eingesetzt werden.

Bei den Zeichen kann es sich um Buchstaben, Zahlen, oder Satzzeichen handeln. In Frage kommen diese Zeichen für alle bekannten Alphabete und Zahlensysteme. Typischerweise wird eine Folge solcher Zeichen eine inhaltliche Bedeutung haben bzw. sich als sinnvoller Inhalt lesen lassen. Das einfachste Beispiel wäre eine Folge von Zeichen, welche einen Namen bildet.

Bevorzugt ist es, wenn zumindest einige der jeweils ein Glied der Kette bildenden Glieder frei von Ösen sind oder nur eine Öse aufweisen, zur Verknüpfung mit benachbarten Glieder. Soll eine Folge von Zeichen beispielsweise Zeichen enthalten, welche einen geschlossen Umriss bilden und einander benachbart angeordnet sind (beispielsweise ein "A" oder ein "B"), so lassen sich diese beiden Glieder ineinander verschlungen mittels der additiven Fertigungstechnik herstellen, ohne dass weitere Elemente zum Verknüpfen dieser Glieder erforderlich werden.

Im Ergebnis betrifft dieser Aspekt der Erfindung ein Verfahren, wobei die Kette aus einer Mehrzahl von Zeichen gebildet wird, wobei die Zeichen eine Aneinanderreihung von gegeneinander beweglichen und ineinandergefügten oder mit Gelenken verbundenen Gliedern bilden, jedenfalls im Falle von benachbarten Gliedern der Kette, welche aus geschlossenen Zeichen gebildet sind.

Geschlossene Zeichen können auf verschiedene Weisen vorliegen. Im Einfachsten Fall ist das Zeichen als solches geschlossen in dem Sinne, dass seine Schreibweise zumindest in Teilbereichen eine geschlossene Linie bildet. Im lateinischen Alphabet sind dies die Buchstaben A, B, D, O, P, und R.

Per se nicht geschlossene Zeichen (alle anderen Zeichen ebenfalls) können aber auch als geschlossenes Kettenglied dadurch ausgebildet werden, dass das Zeichen als geschlossene Umfangskontur ausgebildet wird. Hierzu wird ergänzend aus die Ausführungsbeispiele verwiesen.

Für solche Ketten kommen grundsätzlich alle in der additiven Fertigung verwendeten Materialien in Frage, nicht nur die weiter oben beschriebenen Materialien. Sie können aus einem Werkstoff aus der Gruppe bestehend aus organischem Polymerwerkstoff, Metall, Keramik, Sand und Wax gebildet sein. Insbesondere kann der ausgewählte Werkstoff bereits als solcher eine Dichte haben, welche deutlich über 2 g/cm³, insbesondere über 3 g/cm³, liegt und so die gewünschte wertige Qualitätsanmutung hervorruft.

Als additiven Herstellungsverfahren kommen in Frage: Stereolithographie, Photopolymer Jetting, Binder Jetting, Laser Melting, Electron Beam Melting, Fused Deposition Modelling, Laser Sintering und Material Jetting.

Für beide Varianten der Erfindung gelten die jeweiligen Ausführungen zur anderen Variante gleichermaßen oder analog.

Im Folgenden wird ein Aspekt der Erfindung anhand lediglich Ausführungsbeispiele darstellender Figuren erläutert. Es zeigen:
Figur 1: Verschiedene Zeichen des lateinischen Alphabets, welche als geschlossene Kettenglieder ausgebildet sind,
Figur 2: Eine Kette aus Kettengliedern analog jener der Figur 1.

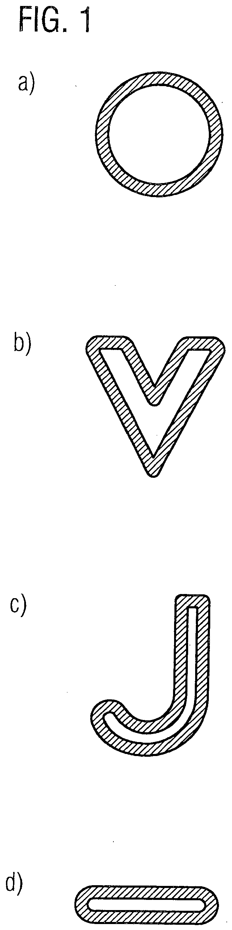

Zunächst erkennt man in der Figur 1a einen Buchstaben des lateinischen Alphabets, nämlich ein "O", welcher per se ein geschlossenes Kettenglied bildet. In den Varianten der Figuren 1b und c erkennt man, dass ein per se nicht geschlossener Buchstabe dadurch als geschlossenes Kettenglied ausgebildet werden kann, dass das Zeichen als geschlossene Umfangskontur ausgebildet ist. In diesen Beispielen sind es ein "V" und ein "J". Ebenso lassen sich Zeichen als geschlossenes Kettenglied ausbilden, welche keine Buchstaben sind. Beispielsweise ist in der Figur 1d ein Bindestrich gebildet. Dies erlaubt es, auch per se nicht geschlossene Buchstaben oder auch Zeichen als geschlossene Kettenglieder auszubilden und folglich mit benachbarten Kettengliedern verknüpft mittels der additiven Fertigungstechnologien herzustellen. Dadurch können Ketten hergestellt werden, welche eine durch eine verknüpfte Aneinanderreihung beliebiger und frei wählbarer Zeichen gebildet sind, und zwar auch in produktionstechnischem Maßstab. Insbesondere ist es entbehrlich (aber dennoch möglich), Zeichen darstellende Kettenglieder mit Ösen oder dergleichen zu versehen, um Zeichen darstellende Kettenglieder miteinander zu verbinden bzw. gegeneinander beweglich zu verknüpfen.

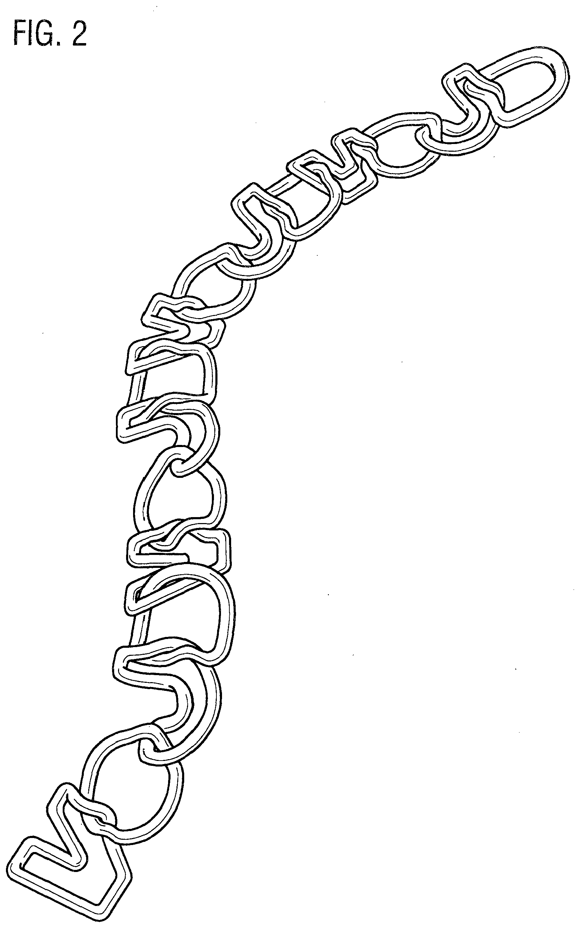

Eine solchermaßen gebildete Kette ist in der Figur 2 dargestellt. Die so gebildete Zeichenfolge ist "VOJDVOJDVOJDVOJD". Dieser Figur ist aber auch zu entnehmen, unabhängig von den dargestellten konkreten Zeichen formenden Kettengliedern, dass jedes Kettenglied ein oder zwei Verdrillungsbereiche aufweisen können, wobei die Verdrillungsbereiche in letzterem Falle in einander gegenüberliegenden Bereichen der Kettenglieder angeordnet sind. Diese Verdrillungsbereiche sind dabei mit der Maßgabe ausgebildet, zwei miteinander verknüpfte Kettenglieder nicht mit ihren Hauptflächen (Papierebene der Darstellungen der Figut 1) gegeneinander verwinkelt werden, sondern (auch) planparallel liegen bzw. hängen können.

## Patentansprüche

1. Verfahren zur produktionstechnischen additiven Herstellung von Ketten auf Basis eines organischen Polymerwerkstoffes,
**dadurch gekennzeichnet,**
**dass** dem Polymerwerkstoff ein Zuschlagsstoff beigemischt ist, welcher die Dichte des Polymerwerkstoffes mit dem Zuschlagsstoff gegenüber dem Polymerwerkstoff ohne den Zuschlagsstoff um zumindest 20% erhöht.

2. Verfahren nach Anspruch 1, **dadurch gekennzeichnet, dass** die Dichte des Polymerwerkstoffes mit dem Zuschlagsstoff gegenüber dem Polymerwerkstoff ohne den Zuschlagsstoff um zumindest 30%, vorzugsweise zumindest 40%, erhöht ist.

3. Verfahren nach Anspruch 1 oder 2, **dadurch gekennzeichnet, dass** der Polymerwerkstoff ausgewählt ist aus der Gruppe bestehend aus Polyamid, insbesondere PA12, thermoplastisches Polyurethan, Silikongummi, ABS, Polylactid, Polypropylen, Polystyrol, Polyvinylalkohol, Polyethylenterephtalat, Nylon, Biopolymere, und WPC (Wood Polymer Composites).

4. Verfahren nach einem der Ansprüche 1 bis 3, **dadurch gekennzeichnet, dass** der Zuschlagsstoff ein Pulver und/oder ausgewählt ist aus der Gruppe bestehend aus Keramik und Metall, wobei der Zuschlagsstoff vorzugsweise weiße oder farblose Keramik ist.

5. Verfahren nach einem der Ansprüche 1 bis 4, **dadurch gekennzeichnet, dass** der Zuschlagsstoff eine Dichte aufweist, welche zumindest das 2-fache, insbesondere zumindest das 3-fache, der Dichte des Polymerwerkstoffes beträgt.

6. Verfahren nach einem der Ansprüche 1 bis 5, **dadurch gekennzeichnet, dass** das Gewichtsmengenverhältnis des Polymerwerkstoffes zu dem Zuschlagsstoff im Bereich von 1 : 0,1 bis 1 : 5, insbesondere von 1 : 0,2 bis 1 : 2, vorzugsweise 1 : 0,4 bis 1 : 1, beträgt.

7. Verfahren nach einem der Ansprüche 1 bis 6, **dadurch gekennzeichnet, dass** anschließend an die Herstellung der Kette ein Tiefenfärbeprozess stattfindet.

8. Verfahren nach einem der Ansprüche 1 bis 7, **dadurch gekennzeichnet, dass** die Kette aus einer Mehrzahl von Zeichen gebildet wird, wobei die Zeichen eine Aneinanderreihung von gegeneinander beweglichen und ineinandergefügten oder mit Gelenken verbundenen Gliedern bilden.

9. Kette, hergestellt mittels eines Verfahrens nach einem der Ansprüche 1 bis 8.

10. Kette, insbesondere herstellbar nach einem der Ansprüche 1 bis 8, **dadurch gekennzeichnet, dass** die Kette aus einer Mehrzahl von Zeichen gebildet ist, wobei die Zeichen eine Aneinanderreihung von gegeneinander beweglichen und ineinandergefügten bzw. verknüpften oder mit Gelenken verbundenen Gliedern bilden.

11. Kette nach Anspruch 10, **dadurch gekennzeichnet, dass** sie aus einem Werkstoff aus der Gruppe bestehend aus organischem Polymerwerkstoff, Metall, Keramik, Sand und Wax gebildet ist.

12. Kette nach einem der Ansprüche 10 oder 11, **dadurch gekennzeichnet, dass** sie mittels eines additiven Herstellungsverfahren aus der Gruppe bestehend aus Stereolithographie, Photopolymer Jetting, Binder Jetting, Laser Melting, Electron Beam Melting, Fused Deposition Modelling, Laser Sintering und Material Jetting hergestellt ist.
